# EUROPÄISCHE PATENTSCHRIFT

(11) **EP 1 397 299 B1**
(45) Veröffentlichungstag und Bekanntmachung des Hinweises auf die Patenterteilung: **13.06.2007**
(21) Anmeldenummer: 02735223.6
(22) Anmeldetag: 04.04.2002
(51) Int. Cl.: B65D 85/32, A01K 43/10

(54) **KENNZEICHNUNGSVORRICHTUNG**
IDENTIFICATION DEVICE
DISPOSITIF D'IDENTIFICATION

(30) Priorität: 05.04.2001 DE 10116933
(43) Veröffentlichungstag der Anmeldung: 17.03.2004
(73) Patentinhaber: Göbel, Gabriele, 50733 Köln (DE)
(72) Erfinder: Göbel, Gabriele, 50733 Köln (DE)
(74) Vertreter: Jönsson, Hans-Peter
(86) Internationale Anmeldenummer: PCT/EP2002/003744
(87) Internationale Veröffentlichungsnummer: WO 2002/081336

(56) Entgegenhaltungen:
- WO-A-00/76883
- DE-A- 2 505 571
- DE-A- 3 527 892
- US-A- 4 768 362

## Beschreibung

Gegenstand der Erfindung ist eine Vorrichtung zur optischen und/oder haptischen Kennzeichnung von Eigenschaften des Hühnereis gemäß dem Oberbegriff des Anspruchs 1.

Hühnereier werden im Haushalt üblicherweise in offenen oder verschließbaren Eierwabenverpackungen oder im Eierfach des Kühlschranks aufbewahrt.

Da Eier im Äußeren einander gleichen, besteht hierbei das Problem, den Zustand, den Frische- oder Gütestatus der Eier zu erkennen, insbesondere wenn verschiedene Chargen unterschiedlichen Legedatums zusammen vorliegen, zumal in Mehrpersonen-Haushalten oder Wohngemeinschaften.

So können beispielsweise frische Eier aus Freilandhaltung (zum Frischverzehr), Eier aus Batteriehaltung (zur Verarbeitung in diversen Speisen), ältere Eier (zur Verarbeitung in diversen Speisen) sowie gekochte Eier nebeneinander vorliegen. Zur Unterscheidung sind manche Eier vom Hersteller durch einen Aufdruck gekennzeichnet. Dieser Aufdruck ist allerdings oft schwierig zu lesen und auf den ersten Blick oft nicht erkennbar. Häufig beschreibt dieser Aufdruck lediglich das Herkunftsland und den Haltungsort, - seltener das Legedatum. Bei Bioeiern ist ein entsprechender Aufdruck in Deutschland überhaupt nicht üblich.

Diese Aufdrucke, sofern sie auf jedem Ei vorhanden sind, sind sie allerdings für blinde Menschen unbrauchbar und sagen auch nichts über den Zustand des Eis, wie beispielsweise gekocht oder roh, aus.

Im Handel sind bereits Eierwärmer und Eierbecher erhältlich, die sich der Eiform ganz oder teilweise anpassen und beispielsweise über ein abnehmbares Oberteil verfügen können. Diese Eierbecher/Eierwärmer bestehen aus harten formstabilen Materialien. Eierwärmer können außerdem aus Textilien bestehen. Abgesehen von dekorativen Effekten sind diese Produkte im wesentlichen auf ihre jeweilige Hauptfunktion beschränkt.

Eierwärmer, die sich durch ein Wärmeisoliermaterial auszeichnen, eignen sich insbesondere nicht dazu, Eier platzsparend in dicht bepackten Behältnissen wie Eierwabenverpackungen oder im Eierfach des Kühlschranks zu kennzeichnen.

An Eiern, die liegend abgestellt werden, haften diese Gegenstände aus harten formstabilen Materialien außerdem nicht zuverlässig.

Aus der US 4,768,362 sind Schlüsselmarkierer bekannt, die aus einem farbigen elastischen Kunststoffring bestehen, der um den Schlüsselkopf formschlüssig anliegt. Diese Ringe können mit haptischen Kennzeichen versehen sein und zusätzlich ein beschreibbares Feld aufweisen.

Aus der DE-A- 25 05 571 ist eine Vorrichtung gemäß dem Oberbegriff des Anspruchs 1 bekannt.

Für die vorliegende Erfindung bestand die Aufgabe darin, eine Vorrichtung bereitzustellen, die es ermöglicht, den Zustand und/oder Status eines Eies auf einen Blick oder durch Tasten schnell zu erkennen. Dabei soll die Vorrichtung platzsparend für übliche Aufbewahrungsformen wie Eierwabenverpackungen oder Eierfächer geeignet und rutschfest sein, so dass auch liegende Eier gekennzeichnet werden können.

Diese Aufgabe wird erfindungsgemäß dadurch gelöst, dass eine Vorrichtung zur optischen und/oder haptischen Kennzeichnung von Eigenschaften eines Hühnereies aus elastischem Kunststoffmaterial bereitgestellt wird, die wenigstens teilweise der äußeren Form eines Hühnereies formschlüssig und/oder kraftschlüssig angepasst ist.

Ein ausreichende Form und/oder Kraftschlüssigkeit der Vorrichtung kann dadurch erreicht werden, dass die verwendeten Kunststoffe im gewöhnlichen Arbeitstemperaturbereich von 0 bis 100 °C, insbesondere bei Temperaturen zwischen 3 °C und Raumtemperatur einen Anteil mit elastischen Eigenschaften aufweisen.

Dadurch kann sich die Vorrichtung der jeweiligen Eiform optimal anpassen und kann durch eine gewisse Spannung gegen Abrutschen Reibungs-geschützt sein. Dies wird erfindungsgemäß durch Verwendung von Polyethylen und Polypropylen, Naturkautschuk, Synthesekautschuk wie beispielsweise thermoplastischen Nitril- oder Fluorkautschuken, Silikonkautschuk, sowie deren Gemische, Blends und/oder Copolymere erreicht.

Die genannten Materialien ermöglichen ein praktisch rutschfestes Anhaften der Kennhüte auf dem Ei, ohne dass Klebstoffe nötig wären. Dies ist insbesondere wichtig, da Eischalen eine hohe Porosität und Durchlässigkeit gegenüber flüssigen oder flüchtigen Substanzen aufweisen. Aus demselben Grunde sind diese unststoffmaterialien bevorzugt in lebensmittelechter und/oder spülmaschinenfester Form einzusetzen.

Die erfindungsgemäßen Vorrichtungen stellen den Kontakt mit der Eioberfläche bevorzugt durch Anpassung an die äußere Form des Hühnereis über eine oder mehrere Kreisringflächen mit gegebenenfalls gleichen und/oder verschiedenen Durchmessern her, die im Gebrauch wenigstens teilweise oder vollständig form- und/oder kraftschlüssig mit der äußeren Oberfläche des Hühnereis in Kontakt stehen.

Die Kennzeichnung der Eimerkmale erfolgt erfindungsgemäß durch optische und/oder haptische Merkmale der Eier-Vorrichung. In einer Ausführungsform geschieht dies durch die äußere geometrische Form. In einer weiteren Ausführungsform kann die optische und/oder haptische Kennzeichnung durch die äußere Farbgestaltung erfolgen. Besonders bevorzugt sind hierbei verschiedene definierte Farben, Farbkombinationen und/oder Muster, Aufdrucke, Logos sowie Piktogramme, anhand derer nach einem vom Hersteller oder gegebenenfalls vom Benutzer festzulegenden System die Zustands- und/oder Statusmerkmale des Hühnereis zugeordnet und gekennzeichnet werden. Ebenso dienen zu diesem Zweck bevorzugt Wort-und/oder Schriftzeichen, Braille-Zeichen und/oder eine beschreibbare Oberfläche. Ebenso kann zur Kennzeichnung auch eine kugelförmige, würfelförmige oder sonst wie gestaltete Oberfläche zur Unterscheidung dienen.

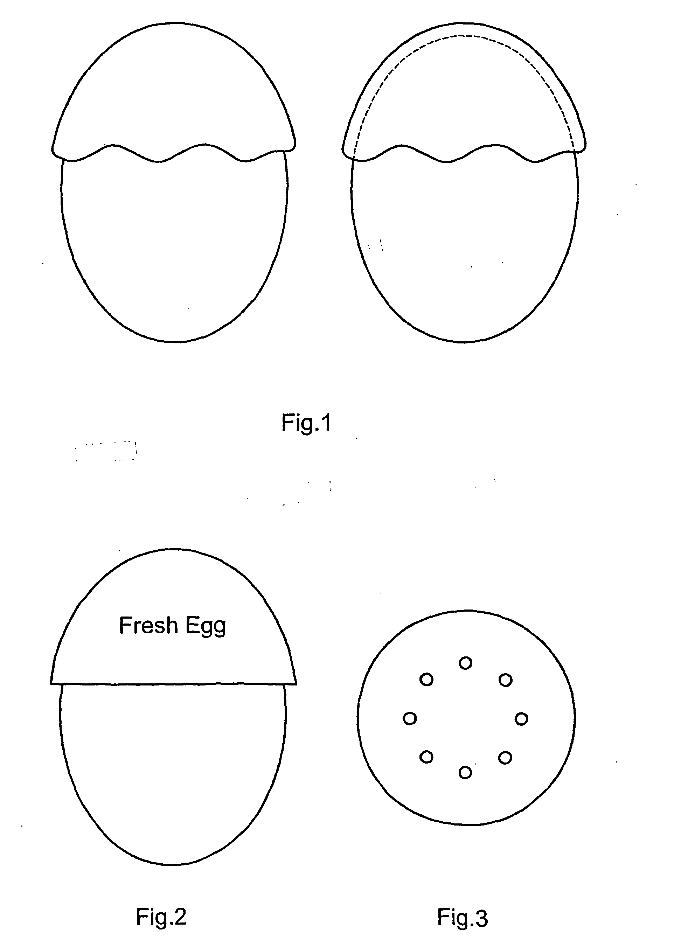

Um möglichst raumsparend und in jedem gebrauchsüblichen Eieraufbewahrungsbehältnis nutzbare Vorrichtung zu erhalten, sind diese besonders in der Form eines Aufsetzhutes oder eines Ringes ausgebildet, gegebenenfalls mit einem regelmäßig oder unregelmäßig wellenförmig ausgebildeten Abschlussrand, wie in Fig. 1 skizziert. Der wellenförmig ausgebildete Abschlussrand hat den besonderen Vorteil, dass bei relativ kleiner Berührungsfläche der Vorrichtung mit der Oberfläche des Hühnereis eine Vielzahl von Größen der Eier praktisch rutschfest verbunden werden kann. Hierbei kann die Dehnungsfähigkeit des Materials besonders gut ausgenutzt werden.

Beispielsweise werden erfindungsgemäße Vorrichtungen aus Silikonkautschuk in verschiedenen einheitlichen Farben (rot, grün, gelb, schwarz) nach dem in Fig. 1 skizzierten Muster gegebenenfalls mit wellenförmigem Rand an einer verhältnismäßig kleinen Eiform hergestellt. Die Vorrichtungen sind form-und/oder kraftschlüssig praktisch unverrutschbar auf Hühnereiern aller üblichen Größen auch im liegenden Zustand. Die solcher Art gekennzeichneten Eier passen in übliche Aufbewahrungsbehälter, wie verschließbare Eierwaben-Kartons oder verschließbare Eierfächer im Kühlschrank. Die Farbkennzeichnung lässt hier beispielsweise die Unterscheidung zwischen frisch (gelb), alt (rot), Freilandei (grün) und gekocht (schwarz) zu.

Alternativ können die Vorrichtungen auch mit Aufschriften (fresh egg, old egg, organic egg, boiled egg) versehen sein wie in Fig. 2 dargestellt ist.

In Fig. 3 wird eine Draufsicht einer erfindungsgemäßen Vorrichtung mit einer haptischen Kennzeichnung durch Erhebungen dargestellt.

## Patentansprüche

1. Vorrichtung zur optischen und/oder haptischen Kennzeichnung von Eigenschaften eines Hühnereies aus elastischem Kunststoffmaterial, die wenigstens teilweise der äußeren Form eines Hühnereies formschlüssig und/oder kraftschlüssig angepasst ist, **dadurch gekennzeichnet daß** das Kunststoffmaterial ausgewählt ist aus Polyethylen, Polypropylen, Natur- und/oder Synthesekautschuk, Silikonkautschuk, deren Gemische, Blends und/oder Copolymeren.

2. Vorrichtung nach Anspruch 1, **dadurch gekennzeichnet, dass** das Kunststoffmaterial Lebensmittel-echt und/oder spülmaschinenfest ist.

3. Vorrichtung nach einem der Ansprüche 1 oder 2, **dadurch gekennzeichnet, dass** die Anpassung an die äußere Form des Hühnereies eine oder mehrere innere Kreisringflächen mit gegebenenfalls gleichen und/oder verschiedenen Durchmessern umfasst, die im Gebrauch wenigstens teilweise oder vollständig formschlüssig und/oder kraftschlüssig mit der äußeren Oberfläche des Hühnereies in Kontakt stehen.

4. Vorrichtung nach einem der Ansprüche 1 bis 3, **dadurch gekennzeichnet, dass** die optische und/oder haptische Kennzeichnung durch die äußere geometrische Form bestimmt ist.

5. Vorrichtung nach einem der Ansprüche 1 bis 4, **dadurch gekennzeichnet, dass** die optische und/oder haptische Kennzeichnung durch die äußere Farbgestaltung, insbesondere durch Auswahl definierter Farben, Farbkombinationen und/oder Muster, Aufdrucke, Logos, Piktogramme, Wort-und/oder Schriftzeichen, Braille-Zeichen und/oder eine beschreibbare Oberfläche bestimmt ist.

6. Vorrichtung nach einem der Ansprüche 1 bis 5 in Form eines Aufsetzhutes und/oder eines Aufsetzringes.

7. Vorrichtung nach Anspruch 6, **dadurch gekennzeichnet, dass** der Aufsetzhut und/oder der Aufsetzring einen regelmäßig oder unregelmäßig wellenförmig ausgebildeten Abschlussrand aufweist.

## Claims

1. A device made of an elastic plastic material for the optical and/or haptic marking of hen's eggs to characterize their properties, which device is at least partly adapted to the outer shape of the egg in a positive locking (form-locking) and/or non-positive locking (force-locking) way, **characterized in that** said plastic material is selected from polyethylene, polypropylene, natural and/or synthetic rubber, silicone rubber, their mixtures, blends and/or copolymers.

2. The device according to claim 1, **characterized in that** said plastic material is food-safe and/or dishwasher-proof.

3. The device according to either of claims 1 or 2, **characterized in that** said adaptation to the outer shape of the hen's egg is effected through one or more circular ring areas having optionally equal and/or different diameters, which during use are in contact with the outer surface of the hen's egg at least partly or entirely in a positive locking (form-locking) and/or non-positive locking (force-locking) way.

4. The device according to any of claims 1 to 3, **characterized in that** said optical and/or haptic marking is defined by the outer geometrical form.

5. The device according to any of claims 1 to 4, **characterized in that** said optical and/or haptic marking is defined by the outer color design, especially by the selection of defined colors, color combinations and/or patterns, prints, logos, pictograms, words and/or characters, Braille signs and/or an inscribable surface.

6. The device according to any of claims 1 to 5 in the form of a top-mountable cap and/or top-mountable ring.

7. The device according to claim 6, **characterized in that** said top-mountable cap and/or top-mountable ring has a regularly or irregularly sinusoidal terminal edge.

## Revendications

1. Dispositif de marquage optique et/ou haptique des caractéristiques d'un oeuf de poule, qui est fait d'un matériau synthétique élastique et qui s'adapte, au moins en partie, à la forme extérieure d'un oeuf de poule, par complémentarité de forme et/ou par adhérence, **caractérisé en ce que** le matériau synthétique élastique est choisi parmi les polyéthylènes, polypropylènes, caoutchouc naturel, caoutchoucs synthétiques et élastomères silicones, ainsi que leurs mélanges et alliages et les copolymères correspondants.

2. Dispositif conforme à la revendication 1, **caractérisé en ce que** le matériau synthétique est autorisé pour les produits alimentaires et/ou résiste au rinçage en machine.

3. Dispositif conforme à la revendication 1 ou 2, **caractérisé en ce que** l'adaptation à la forme extérieure d'un oeuf de poule met en jeu une ou plusieurs surfaces annulaires internes, éventuellement de diamètres identiques et/ou différents, qui sont, en service, au moins partiellement ou totalement en contact, par complémentarité de forme et/ou par adhérence, avec la surface externe de l'oeuf.

4. Dispositif conforme à l'une des revendications 1 à 3, **caractérisé en ce que** le marquage optique et/ou haptique est fourni par la forme géométrique extérieure.

5. Dispositif conforme à l'une des revendications 1 à 4, **caractérisé en ce que** le marquage optique et/ou haptique est fourni par la configuration colorée extérieure, en particulier par un choix de certaines couleurs, combinaisons de couleurs et/ou dessins, impressions, logos, pictogrammes, mots et/ou signes graphiques, signes Braille, et/ou une surface inscriptible.

6. Dispositif conforme à l'une des revendications 1 à 5, en forme de calotte de support et/ou d'anneau de support.

7. Dispositif conforme à la revendication 6, **caractérisé en ce que** la calotte de support et/ou l'anneau de support comporte(nt) un bord de fermeture de forme régulièrement ou irrégulièrement ondulée.
